**Europäisches Patentamt**

**European Patent Office**

**Office européen des brevets**

(11) Publication number: **0 201 310**
**A2**

## EUROPEAN PATENT APPLICATION

(21) Application number: **86303419.5**

(22) Date of filing: **06.05.86**

(51) Int. Cl.4: **C10J 3/84**

(30) Priority: **09.05.85 GB 8511797**
**13.06.85 GB 8514985**

(43) Date of publication of application:
**17.12.86 Bulletin 86/46**

(84) Designated Contracting States:
**BE DE FR IT NL**

(71) Applicant: **British Gas Corporation**
**Rivermill House 152 Grosvenor Road**
**London SW1V 3JL(GB)**

(72) Inventor: **Brook, Peter Holroyd**
**Bracebridge Tutts Clump**
**Bradfield Reading(GB)**
Inventor: **Davies, Haydn Steadman**
**555 Warwick Road**
**Solihull West Midlands(GB)**
Inventor: **Tart, Keith Raymond**
**162 Walsall Road Four Oaks**
**Sutton Coldfield West Midlands(GB)**
Inventor: **Timmins, Cyril**
**11 Whitehouse Close**
**Solihull West Midlands(GB)**

(54) **Purification of effluent liquors.**

(57) Effluent liquors, eg. those produced on cooling synthesis gas streams obtained by the ash slagging of coal in the presence of steam and oxygen, and containing volatile and oxidizable species are purified by sparging the liquor with an oxygen-containing gas. The liquor may be sparged with steam prior to oxygen-sparging or, alternatively, a mixture of steam and oxygen may be used for the sparging. The gaseous products obtained after sparging may be used directly as reactants for the coal gasification reaction together with any supplementary steam and/or oxygen.

FIG. 1.

## Purification of Effluent Liquors

This invention relates to the treatment of effluent liquors. More particularly, the present invention relates to the purification of aqueous liquors obtained from coal gasification processes.

In the gasification of carbonaceous feedstocks, for example by the ash-slagging steam-oxygen gasification of coal, the crude synthesis product contains steam which, upon cooling, yields an aqueous liquor. During this condensation process soluble species such as hydrogen sulphide, carbon dioxide, ammonia, hydrogen cyanide, hydrogen chloride and polar organic compounds, eg. phenols are dissolved in the liquor. These liquors are environmentally unacceptable and the disposal of such can cause serious problems.

Hitherto, attempts to purify such liquors and alleviate the disposal problems have included the use of low pressure steam to remove the more volatile materials followed by, for example Claus sulphur recovery, phenol extraction and a final waste water treatment.

We have now found that the gasification agents themselves may be employed, at the gasification pressure, to remove the volatile components from such liquors and that by including these components in the reactant stream, they are gasified within the main reactor. Thus in one aspect, the present invention provides a process for the production of a synthesis gas by the ash-slagging gasification of a hydrocarbon feedstock in the presence of gasification agents selected from steam and an oxygen-containing gas wherein the synthesis gas is cooled to condense out an aqueous liquor containing solubilized, volatile and oxidizable species characterised in that at least a portion of said aqueous comdensed liquor is sparged with at least a portion of at least one of said gasifying agents prior to reaction of said gasiying agent with said solid carbonaceous feedstock.

Thus in the gasification of coal, a portion of, for example, the gasifier feed steam is superheated, passed through at least a portion of the condensate liquor, combined with the remaining portion of gasifier steam feed and thereafter injected through the tuyeres of the gasification plant. In this way an effluent liquor is produced which contains substantially only inorganic compounds which can be removed by conventional waste-water treatments.

We have found that whilst high pressure steam stripping does remove many lighter volatile components, compounds such as the higher molecular weight phenols may not be readily stripped out. Thus, the purified condensate liquor has to be subjected to a further purification step in the waste water treatment stage, eg. by biological oxidation. Any disadvantages associated with biological oxidation which can be avoided by subjecting the condensate liquor or a proportion thereof, to sparging by an oxygen-containing gas.

Thus in accordance with another aspect of the present invention there is provided a process for the purification of aqueous effluent liquors containing both volatile and oxidizable species, which process comprises sparging said liquor with an oxygen-containing gas at a pressure of at least 7 bar.

In addition to sparging with steam or oxygen-containing gas alone the liquor may be sparged with steam alone, prior to sparging with the oxygen-containing gas in order to remove the more volatile components. Alternatively, the liquor may be sparged with a mixture of both steam and the oxygen-containing gas.

The process of the present invention is particularly suitable for the purification of effluents obtained from the ash-slagging gasification of coal-based feedstocks preferably at pressures of at least 7 bar and may be employed in processes for the production of synthesis gases which are used as precursors in, for example, the manufacture of substitute natural gas (SNG).

A typical effluent liquor would contain the following organic and inorganic components.

|  | mg. $1^{-1}$ |
|---|---|
| Free Ammonia | 13000 |
| Fixed Ammonia | 4000 |
| Total Phenols | 6600 |
| Chlorides (as chloride) | 6500 |
| Sulphides (as sulphur) | 4300 |
| Thiocyanates | 1200 |
| Cyanrides | 100 |
| Fatty Acids | 1000 |

From a 4700 tonne day $^{-1}$ coal gasification plant operating at 25 bar and consuming steam and oxygen at rates of 80000 and 130000 kg hr$^{-1}$, respectively, an aqueous liquor is condensed out of the synthesis gas at temperatures of between 50-100°C, pressures of between 1 to 12 bar and at a liquor flowrate of, typically, about 39000 kg hr$^{-1}$. The liquor may be sparged with an oxygen containing gas, eg oxygen having a purity of at least 90% molar, at a pressure of about 33 bar and temperature of from 50-150°C. For liquor flow rates of about 39000 kg hr$^{-1}$, oxygen -containing gas flowrates would typically be between 2000 to 3000 kg hr$^{-1}$.

The liquor may also be sparged with steam and preferably such steam would be at least a portion of that employed as a reactant with said carbonaceous material.

Thus for a 4700 tonne day $^{-1}$ plant as described above, of the 80000 kg hr$^{-1}$ steam required as reactant, 20000 kg hr$^{-1}$ can be used for sparging, eg at 400°C and 33 bar.

The liquor may be separately sparged with both steam and oxygen-containing gas, preferably with steam first to remove the more volatile components. The gaseous products from the sparging process may be fed separately to the ash-slagging gasification process or, alternatively, the gaseous products may be combined prior to feeding to the gasification reactor.

In another embodiment the steam and oxygen-containing gas employed for both sparging and as co-reactants for the gasification reaction may be combined prior to sparging and the gaseous product fed directly to the reactor, after admixture with any supplementary steam and/or oxygen-containing gas.

After sparging, the stripped liquor may be recovered at rates ranging from 35000 -37000 kg hr$^{-1}$ at a pressure of 32 bar and a temperature of 240°C. The vapour product, at the same temperature and pressure, can be recovered from the contactor at flowrates ranging from 24000 -27000 kg hr$^{-1}$ and recombined with the remaining steam and oxygen as gaseous reactants for the gasifier.

The sparging of the liquor with oxygen-containing gas, eg. air, mixtures of air and oxygen per se, may be carried out directly or in the presence of a catalyst which promotes oxidation.

The oxidation process may include combustion of hydrocarbon species present in the liquor, any heat of combustion being dissipated by evaporation of the liquor.

Sparging can also be carried out in the presence of alkaline materials to assist in the liberation of ammonia.

The invention will be further described with reference to the accompanying drawings which are schematic flow diagrams of a coal-gasification process scheme illustrating embodiments of the invention.

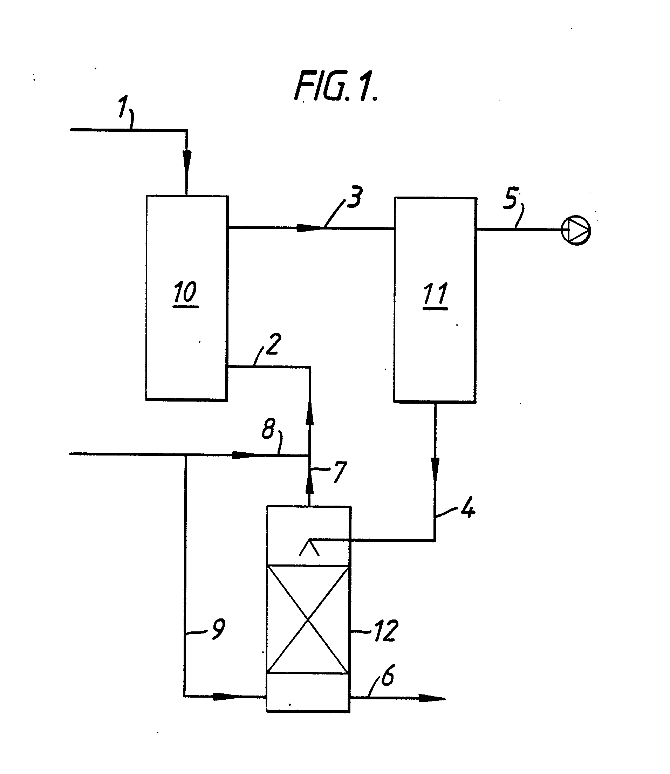

Referring to Figure 1 of the drawing, into an ash-slagging gasifier 10, for example, that described in "The Chemistry of Coal Utilization", 2nd Supplementary Volume, 1981, published by John

Wiley & Son Inc., are fed coal 1 and steam-oxygen mixture 2. The synthesis gas 3 is subject to cooling in cooling train 11 where the gas is cooled and the resulting condensate separated out to produce an aqueous steam 4 which separates from the crude gas 5. The crude gas 5 is subjected to down stream treatment (not shown) for further purification and upgrading. The aqueous liquor steam 4 contains solubilised but volatile species and is circulated to a contactor 12.

Within the contactor, the liquor is sparged with a steam-oxygen mixture 9. The contactor tower may be of conventional design and comprise a number of packed beds or trays. The liquor is caused to descend through the tower against a countercurrent ascending flow of the steam-oxygen mixture. In order to recover any heat in the liquid product 6 exiting the tower, indirect heat exchange means (not shown) may be provided to exchange heat from the outlet product and the liquid inlet feed.

The gaseous product 7 exiting tower 12 comprises steam, oxygen, volatile inorganic compounds and oxidation products of organic compounds, for example, phenols and fatty acids. Stream 7 can be combined with a supplementary steam/oxygen mixture 8 to form the gaseous reactant inlet stream 2 for the gasification reaction.

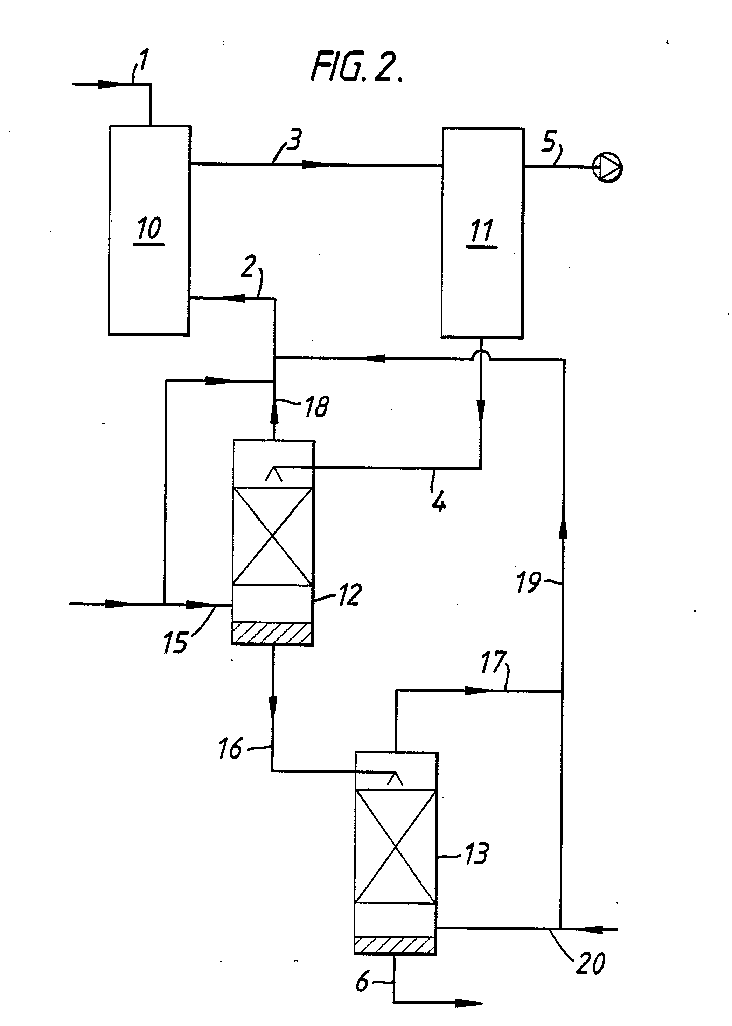

Referring to the embodiment shown in Figure 2, a coal feed 1 is gasified in reactor 10 with a steam-oxygen mixture 2 and the product 3 subjected to separation in separator 5. The liquor stream 4 is passed to contactor tower 12 as previously described. However, instead of sparging with a steam-oxygen mixture 9 (Figure 1) the liquor is contacted with a steam stream 15 at, for example, a temperature of about 250°C and pressure between 30-40 bar. The steam stripped liquor is moved from contactor 12 via line 16 whilst the off gas 18 is combined with additional steam 15.

The steam stripped liquor 16 enters a further contact tower 13 in which it is sparged with a counter current flow of an oxygen-containing gas 20 eg. a mixture of oxygen and carbon dioxide at 100 -150°C. Within the contact tower 13 oxidizable species in the liquor are reacted with the oxygen at for example a temperature ranging from 150 - 200°C and any volatile oxidation products are carried off with the off-gas 17. The bottoms liquor 6 is subjected to conventional waste-water treatment whilst the off-gas 17 can be combined with any supplemental oxygen containing gas 20 which is then subsequently combined with the steam containing component 18 to form the treatment stream 2.

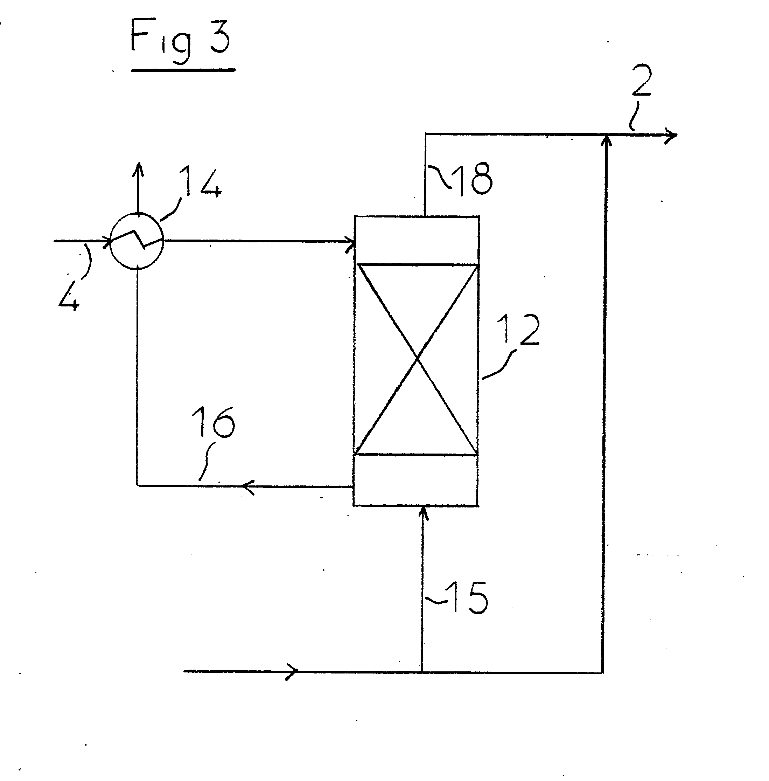

In the configuration shown in Figure 3, condensed liquor 4 from separator 11 (not shown) is sprayed into the top of the stripper 12 where it contacts a stream of ascending steam 15. The steam stripped liquor 16 is removed from the bottom of the tower and subjected to indirect heat exchange with incoming liquor 4 in heat exchanger 14.

An embodiment of the invention will be illustrated by the following Example.

To a stripping tower 12, was fed a gas liquor 4 at an initial temperature and pressure of 70° and 11.4 bar (absolute) respectively, and at a rate of 55.5 tons hr$^{-1}$.

The composition, ppm (wt), of the liquor was as follows:-

| | |
|---|---|
| Suspended Solids | 300 |
| Oil/Tar/Grease | 2332 |
| Thiosulphate/Sulphate (as S) | 260 |
| Sulphide (as S) | 600 |
| Free $NH_3$ | 1700 |
| Fixed $NH_3$ | 1700 |
| Chloride (as CL) | 2000 |
| total Phenols | 5500 |
| Monohydric Phenols | 3500 |
| Fatty Acids | 500 |
| Cyanide | 70 |
| Thiocyanate | 170 |
| Chromium | 1.6 |
| Nickel | 0.02 |
| Copper | 0.003 |
| Zinc | 0.01 |
| Cadmium | 0.001 |
| Lead | 0.01 |
| Vanadium | 0.03 |
| Iron | 1000 |

Also to the tower a high pressure steam feed 15 at 400°C, 33 bar (absolute) was fed at a rate of 30.4 tons hr⁻¹.

From the tower 12, stripped liquor 16 was removed at a rate of 52.6 tons hr⁻¹, at a pressure of 32 bar and a temperature of 239°C.

The composition ppm (wt) of the stripped liquor was:-

| | |
|---|---|
| Suspended Solids | 317 |
| Oil/Tar/Grease | 2460 |
| Thiosulphate/Sulphate (as S) | 273 |
| Sulphide (as S) | 10 |
| Free $NH_3$ | 30 |
| Fixed $NH_3$ | 1441 |
| Chloride (as Cl) | 2110 |
| Total Phenols | 2479 |
| Monohydric Phenols | 369 |
| Fatty Acids | 529 |
| Cyanide | – |
| Thiocyanate | – |
| Chromium | 1.7 |
| Nickel | 0.02 |
| Copper | 0.003 |
| Zinc | 0.01 |
| Cadmium | 0.003 |
| Lead | 0.01 |
| Vanadium | 0.03 |
| Iron | 1055 |

In heat exchanger 14 indirect heat exchange between liquors 4 and 16 caused the temperature of liquor 4 to be raised to 230°C prior to introduction into tower 12, and temperature of the stripped liquor to drop to 77°C.

## Claims

1. A process for the purification of aqueous effluent liquors containing both volatile and oxidizable species which process comprises sparging said liquor with an oxygen-containing gas at a pressure of at least 7 bar.

2. A process for the production of a synthesis gas by the ash-slagging gasification of a solid carbonaceous feedstock in the presence of gasifying agents selected from steam and an oxygen-containing gas wherein the synthesis gas is cooled to condense out an aqueous liquor containing solubilised volatile and oxidizable species characterised in that at least a portion of said condensed aqueous liquor is sparged with at least a portion of at least one of said gasifying agents prior to reaction of said gasifying agent with said solid carbonaceous feedstock.

3. A process as claimed in Claim 2 wherein the pressure of said gasifying agent is at least 7 bar.

4. A process as claimed in Claim 1 or Claim 2 wherein a mixture oxygen-containing gas and steam is used.

5. A process as claimed in claim 1 or Claim 2 wherein said liquor is further sparged with steam.

6. A process as claimed in claim 2 wherein said liquor is sparged with steam prior to sparging with said oxygen-containing gas.

7. A process as claimed in Claim 4 or Claim 6 wherein said sparging steam is at least a proportion of that required for reaction with said carbonaceous feedstock.

8. A process as claimed in Claim 7 wherein the gaseous products from said spargings are admixed prior to reaction with said carbonaceous feedstock.

9. A process as claimed in any preceding claim wherein said sparging with oxygen-containing gas is carried out in the presence of a catalyst which promotes oxidation.

10. A process for the purification of effluent liquors according to Claim 1 and substantially as hereinbefore described.

11. A process for the production of synthesis gases according to Claim 2 and substantially as hereinbefore described.

12. A synthesis gas whenever produced by the process claimed in any one of Claims 2 to 9 or 11.

# FIG.1.

# FIG. 2.

Fig 3